# FASCICULE DE BREVET EUROPEEN

(11) **EP 2 118 236 B1**
(45) Date de publication et mention de la délivrance du brevet: **28.12.2011**
(21) Numéro de dépôt: 08708468.7
(22) Date de dépôt: 30.01.2008
(51) Int. Cl.: C09K 17/00, C04B 41/00, E02D 3/12

(54) **PROCEDE DE CALCIFICATION PAR BACTERIES CALCIFIANTES**
VERKALKUNGSVERFAHREN MIT VERKALKUNGSBAKTERIEN
CALCIFICATION METHOD USING CALCIFICATION BACTERIA

(30) Priorité: 30.01.2007 FR 0752968
(43) Date de publication de la demande: 18.11.2009
(73) Titulaire: Soletanche Freyssinet, 92500 Rueil Malmaison (FR)
(72) Inventeur: DARSON-BALLEUR, Sabine, F-92000 Nanterre (FR); GIRINSKI, Olivier, F-92000 Nanterre (FR)
(74) Mandataire: Nevant, Marc
(86) Numéro de dépôt international: PCT/EP2008/051153
(87) Numéro de publication internationale: WO 2008/095848

(56) Documents cités:
- WO-A-2006/066326
- FR-A1- 2 734 261
- FR-A1- 2 873 725

## Description

L'invention concerne une méthode d'amélioration de la résistance d'un matériau poreux ou perméable, ou de la calcification bactérienne.

L'invention concerne en particulier une méthode d'amélioration de la résistance d'un matériau poreux ou perméable par bio-calcification, avantageusement en conservant la croissance et/ou l'activité enzymatique des bactéries utilisées. Cette invention est plus particulièrement destinée à la consolidation d'un sol, ou d'un support minéral ou organique, notamment tel qu'un sable, un support siliceux et/ou calcaire, à la rénovation ou la protection de façades, au renforcement de sols ou à la stabilisation de pentes, notamment dans le cadre de la lutte contre les sinistres des constructions en cas de séismes.

### ETAT DE L'ART

La précipitation des carbonates de calcium par voie bactérienne est un phénomène naturel bien connu : Certaines bactéries, en métabolisant un substrat carboné, produisent une augmentation d'ions carbonates et bicarbonates dans le milieu environnant qui, combinés à des ions calcium, entraînent la précipitation de carbonates de calcium.

Ce phénomène est déjà utilisé industriellement pour la rénovation ou la protection de façades, (Université Paris VI - CA 2012444), le renforcement de sol ou stabilisation de pente (Université Murdoch et Calcite Technology Pty Ltd-WO2006066326) ou encore la consolidation de sols liquéfiables (brevet Compagnie du Sol-FR2873725).

L'utilisation de bactéries dans des procédés industriels, notamment pour calcifier des supports minéraux, se fait via des phases aqueuses. La plupart du temps, une fois les bactéries mises en place, des solutions nutritives et/ou réactives (calcifiantes) sont pulvérisées ou injectées pour que le procédé puisse s'accomplir. Il est donc important que les bactéries soient suffisamment bien fixées au support à traiter pour que les phases mises en place postérieurement ne les déplacent pas ou ne les éliminent pas. Cette fixation doit aller de paire avec le maintien de l'activité enzymatique des bactéries.

Les applications industrielles se heurtent donc à un problème majeur qui est la faible adhésion des bactéries sur le support à traiter. Ce problème a pour conséquence une diminution du taux et une augmentation du temps de calcification, ce qui induit une perte de compétitivité de la méthode par rapport à des techniques classiques de rénovation ou de renforcement.

Différentes techniques se proposent déjà de résoudre ce problème en utilisant soit des polymères de type cellulosique ou acrylique (demandes de brevets Seikatsu Bunkasha KK JP2004215561, et brevets UBE industries JP55015703, et Merck patent Gmbh US3959080), soit des ions divalents (Université Murdoch-WO2006066326). Les inconvénients de ces techniques sont, respectivement, la viscosification des milieux par développement de longues chaînes de polymères, ce qui est incompatible avec la bonne pénétration des produits dans les procédés d injection de sol, et la mise en oeuvre de volumes de produits supplémentaires qui rendent le procédé d'autant moins intéressant financièrement.

### BUTS DE L'INVENTION

L'invention a pour but principal de résoudre le problème technique consistant en la fourniture d'une méthode pour améliorer les procédés de bio-calcification.

L'invention a également pour but de résoudre le problème technique consistant en la fourniture d'une méthode pour améliorer la résistance d'un matériau poreux ou perméable.

L'invention a également pour but de résoudre le nouveau problème technique consistant en la fourniture d'une méthode pour améliorer l'adhésion bactérienne sur un matériau poreux ou perméable, et notamment sur un support minéral ou organique poreux ou perméable, et notamment sur un sol, tel qu'un sable siliceux, comme par exemple un sable de Fontainebleau, un support siliceux et/ou calcaire.

L'invention a notamment pour but de résoudre le problème technique consistant en l'amélioration de la consolidation d'un sol, ou d'un support minéral ou organique, notamment tel qu'un sable, un support siliceux et/ou calcaire, l'amélioration de la rénovation et/ou la protection de façades, ou l'amélioration du renforcement de sols ou de la stabilisation de pentes.

L'invention a pour but notamment d'augmenter l'adhésion des bactéries sur le matériau ou support à traiter notamment pour améliorer la calcification bactérienne, en particulier dans les buts indiqués ci-dessus.

L'invention a pour but de résoudre les différents problèmes techniques cités ci-dessus de préférence en maintenant la croissance et/ou l'activité enzymatique bactérienne. En particulier l'invention a pour but d'augmenter l'activité enzymatique de bactéries calcifiantes, et/ou la croissance de ces bactéries.

L'invention a pour but notamment de résoudre les problèmes techniques mentionnés ci-dessus en fournissant un procédé ou méthode amélioré de calcification bactérienne sans étape supplémentaire, et/ou sans augmentation de la quantité ou du volume, et/ou sans augmentation de la viscosité des fluides utilisés.

D'autre part, l'invention a pour but également de fournir une méthode ou un procédé permettant d'augmenter le taux de calcification et/ou de diminuer le temps de calcification.

L'invention a pour but de résoudre ces problèmes techniques dans le cadre de l'injection de bactéries dans le sol pour améliorer sa cohésion et/ou sa résistance.

Ces problèmes techniques doivent être résolus de manière reproductible, industrielle, aux plus faibles coûts, avantageusement sans toxicité environnementale, et de préférence en améliorant la résistance à l'érosion et à la pollution, tout en gardant une structure naturelle à la roche et/ou au matériau renforcé ou consolidé.

### DESCRIPTION DE L'INVENTION

Ainsi, la présente invention décrit une méthode ou procédé pour améliorer la résistance d'un matériau poreux ou perméable, de préférence un support poreux ou perméable comme un support minéral et/ou organique poreux ou perméable, tel qu'un sol, une roche, ou un matériau de construction, comprenant :
- la mise en contact d'au moins un type de bactéries calcifiantes avec un matériau poreux ou perméable,
- la mise en contact des bactéries calcifiantes avec un milieu calcifiant, ladite méthode ou procédé comprenant :
- la mise en contact des bactéries calcifiantes avec un agent d'adhésion et l'assimilation par les bactéries calcifiantes de l'agent d'adhésion, notamment pour améliorer la résistance du matériau poreux ou perméable.

Dans la présente invention, on entend par amélioration de la résistance du matériau poreux ou perméable : le renforcement ou la consolidation d'un matériau poreux ou perméable, l'amélioration ou l'augmentation de la cohésion entre les particules d'un matériau poreux ou perméable, ou l'amélioration ou l'augmentation de la résistance à la compression de ce matériau. On préfère utiliser la méthode selon la Norme sur les essais de compression simple (NF EN 12390-3) pour vérifier l'amélioration de la résistance du matériau poreux ou perméable.

Selon un premier mode de réalisation avantageux, l'agent d'adhésion est ajouté au milieu de culture des bactéries, et/ou dans l'inoculum, avant ou lors de la mise en contact des bactéries calcifiantes avec le matériau poreux ou perméable.

Selon un second mode de réalisation avantageux, l'agent d'adhésion est ajouté au milieu calcifiant avant ou lors de la mise en contact des bactéries calcifiantes avec le milieu calcifiant.

Selon un troisième mode de réalisation avantageux, l'agent d'adhésion est ajouté dans le milieu de culture et dans le milieu calcifiant.

Une bactérie calcifiante est avantageusement une bactérie permettant une augmentation des ions carbonates et bicarbonates dans le milieu environnant, notamment en métabolisant un substrat carboné, pour obtenir la précipitation de carbonates de calcium en présence de calcium.

Les bactéries préférées sont celles utilisant l'inuline parmi les sources de carbone assimilables.

Avantageusement, la bactérie calcifiante est *Sporosarcina pasteurii.*

L'agent d'adhésion, permet aux bactéries d'améliorer la résistance du matériau poreux ou perméable, notamment en améliorant l'adhésion des bactéries au matériau à traiter. Logiquement cette propriété est due à la production d'un plus grand nombre d'exopolysaccharides par les bactéries calcifiantes qui assimilent l'agent d'adhésion. Cette solution a pour avantage de ne pas compliquer le procédé industriel, ni de le rendre plus long, ni plus coûteux, tout en apportant une amélioration de la calcification et de l'adhésion au support.

De préférence, l'agent d'adhésion ne modifie pas les caractéristiques physiques des solutions utilisées, notamment la viscosité.

L'agent d'adhésion est choisi de préférence pour ne pas diminuer l'activité enzymatique des bactéries calcifiantes et n'a de préférence aucune toxicité environnementale.

De préférence l'agent d'adhésion est assimilé par la bactérie sans inhiber la synthèse d'uréase.

Un agent d'adhésion très intéressant est l'inuline.

Avantageusement, l'agent d'adhésion est choisi parmi le groupe consistant en le topinambour, la patate douce, le salsifis, le poireau, la chicorée, l'artichaut, l'oignon, l'ail, l'échalote, l'aunée (*Inula helenium*)*,* et l'un quelconque de leurs mélanges, ces composés étant riches en inuline.

On peut également utiliser un extrait végétal quelconque contenant de l'inuline, obtenu notamment à partir de tout ou partie des végétaux mentionnés.

On préfère utiliser la chicorée (*Cichorium intybus*) dans la mesure où la proportion d'inuline est importante et que cette matière première est facilement disponible en grande quantité pour être utilisée à l'échelle industrielle, notamment pour les présentes applications.

L'inuline obtenue à partir de végétaux peut être purifiée ou fractionnée de manière à obtenir des fractions plus ou moins concentrées en inuline.

L'agent d'adhésion peut être utilisé seul ou dans une composition dite composition d'adhésion.

L'agent d'adhésion peut être ajouté en plusieurs fois. On peut par exemple cultiver les bactéries calcifiantes en présence de l'agent d'adhésion puis ajouter à nouveau l'agent d'adhésion au moment ou juste avant la mise en contact des bactéries calcifiantes avec le milieu poreux ou perméable.

Ainsi la présente invention concerne également un milieu d'adhésion comprenant un agent d'adhésion et un milieu de culture et/ou un milieu de calcification d'au moins un type de bactérie calcifiante, comme par exemple *Sporosarcina pasteurii.*

Avantageusement, ce milieu comprend une concentration efficace d'au moins un agent d'adhésion pour favoriser la synthèse d'exopolysaccharides par une bactérie calcifiante assimilant l'agent d'adhésion, comme par exemple *Sporosarcina pasteurii.*

Avantageusement, le milieu d'adhésion comprend une concentration efficace d'inuline supérieure à 0 et inférieure à 10 g/L, et de préférence comprise entre 1 et 10 g/L dans le milieu de culture ou dans l'inoculum, et de préférence comprise entre 250 et 1000 mg/L dans le milieu de calcification.

Avantageusement, il a été découvert de manière surprenante que l'ajout combiné de l'agent d'adhésion et d'au moins un sel d'ion divalent permet d'obtenir une très bonne adhésion des bactéries. Cet ajout combiné peut s'effectuer de manière simultanée, ou successive, c'est-à-dire d'ajouter le sel d'ion divalent dans le milieu de culture, et/ou l'inoculum, et/ou dans le milieu calcifiant avant et/ou après l'ajout de l'agent d'adhésion.

L'ion divalent est avantageusement choisi parmi les ions calcium, magnésium, nickel, zinc, et l'une quelconque de leurs combinaisons.

Les ions calcium sont de préférence ajoutés sous forme de nitrate de calcium, de chlorure de calcium, ou d'un autre sel de calcium.

De préférence ce sel est soluble dans le milieu dans lequel il est ajouté. On peut combiner des sels d'ions divalents, et en particulier de calcium, pour bénéficier d'un effet avantageux.

Avantageusement, la concentration d'ions divalents, et en particulier de calcium ou de magnésium, est comprise entre 1 et 50 mM. Typiquement on peut ajouter dans le milieu 2 à 20mM, comme par exemple 10mM de sel de calcium ou de magnésium.

Ainsi, la méthode pour améliorer la résistance d'un matériau poreux ou perméable comprend avantageusement la mise en contact des bactéries calcifiantes avec au moins un sel d'ions divalents, et en particulier de calcium ou de magnésium.

De même, le milieu d'adhésion sur la présente invention peut comprendre au moins un sel d'ions divalents, et en particulier de calcium ou de magnésium.

Selon un mode de réalisation préféré, on cultive les bactéries calcifiantes en présence d'un agent d'adhésion, de préférence comprenant de l'inuline comme la chicorée (par exemple 1.5 g/L de chicorée), et on ajoute au milieu de culture de l'agent d'adhésion, de préférence contenant de l'inuline comme la chicorée (par exemple entre 0.5 et 8 g/L, et typiquement 2 g/L), et un sel de calcium ou de magnésium (par exemple de 1 à 50 mM, et typiquement 10 mM), au moment de la mise en contact des bactéries calcifiantes avec un matériau poreux ou perméable, ou un peu avant.

On apporte aux bactéries calcifiantes les nutriments nécessaires pour assurer leur survie. Les solutions nutritives sont des solutions standards, bien connues de l'homme du métier. Elles apportent aux bactéries calcifiantes une source de carbone organique, d'azote, et d'autres éléments indispensables à leur fonction physiologique. On comprend bien que si plusieurs types de bactéries calcifiantes sont utilisés, il peut être nécessaire d'utiliser des solutions nutritives différentes, répondant aux besoins de chaque type de bactéries.

À titre indicatif un exemple de milieu de culture pour les bactéries calcifiantes est un milieu contenant des sources de carbone complexes tel que le milieu columbia ou un milieu contenant de l'extrait de levure.

On entend par «milieu calcifiant », un milieu permettant de générer CaCO3 en présence de bactéries calcifiantes. A titre indicatif, un milieu calcifiant pour les bactéries calcifiantes est un milieu contenant de l'urée et du calcium.

L'invention concerne également l'utilisation d'au moins un agent d'adhésion assimilable par une bactérie calcifiante, éventuellement en combinaison avec moins un sel d'ions divalents, de préférence choisi parmi les ions calcium, magnésium, nickel, zinc, et l'une quelconque de leurs combinaisons, et encore de préférence choisi parmi les ions de calcium ou de magnésium, pour améliorer la calcification d'un support minéral ou organique poreux ou perméable, tel qu'un sol, par exemple un sable siliceux tel que le sable de Fontainebleau, ou un support siliceux et/ou calcaire, par voie biotechnologique, de préférence en utilisant

*Sporosarcina pasteurii.*

La présente invention concerne également une composition pour la consolidation de sols comprenant au moins un type de bactéries calcifiantes et comprenant une concentration efficace d'au moins un agent d'adhésion pour son assimilation par lesdites bactéries calcifiantes, comme par exemple *Sporosarcina pasteurii,* ladite composition comprenant éventuellement un milieu de culture des bactéries calcifiantes, et/ou éventuellement au moins un sel d'ions divalents, de préférence choisi parmi les ions calcium, magnésium, nickel, zinc, et l'une quelconque de leurs combinaisons, et encore de préférence choisi parmi les ions de calcium ou de magnésium. Les différentes variantes de réalisation sont citées ci-dessus.

La présente invention concerne une méthode pour le renforcement d'un sol, en particulier la consolidation de sols liquéfiables, la stabilisation de pentes, notamment dans le cadre de la lutte contre les sinistres des constructions en cas de séismes, la calcification de supports minéraux ou organiques poreux ou perméables, ou la rénovation ou la protection de façades, ladite méthode mettant en oeuvre la méthode ou de procédé décrit ci-dessus.

Avantageusement, le support a une granulométrie essentiellement comprise entre 10 µm et 2 mm. Cette granulométrie correspond à la taille des particules ne passant pas dans un tamis ayant une taille de maille inférieure à 10 microns à l'exclusion des particules ne passant pas dans un tamis ayant une taille de mailles inférieure à 2 mm. De préférence, le support comprend 80% de telles particules, et encore de préférence l'ensemble des particules satisfont à cette granulométrie. On préfère utiliser par exemple un sable siliceux tel qu'un sable de Fontainebleau ayant des particules de taille comprise entre 50 et 500 microns (µm) (analyse par tamisage).

Avantageusement, une première méthode de renforcement du sol comprend :
- l'injection, dans un matériau poreux ou perméable, d'une phase aqueuse comprenant au moins un type de bactéries calcifiantes, et de préférence *Sporosarcina pasteurii,* lesdites bactéries calcifiantes ayant été cultivées éventuellement en présence d'un agent d'adhésion assimilable par les bactéries calcifiantes, et de préférence en présence d'inuline,
- l'activation de la calcification par la mise en contact des bactéries calcifiantes avec une phase aqueuse calcifiante comprenant au moins un agent d'adhésion assimilable par les bactéries calcifiantes, et de préférence l'inuline, et éventuellement au moins un sel d'ions divalents, de préférence choisi parmi les ions calcium, magnésium, nickel, zinc, et l'une quelconque de leurs combinaisons, et encore de préférence choisi parmi les ions de calcium ou de magnésium.

Avantageusement, une autre méthode de renforcement du sol comprend :
- l'injection, dans un matériau poreux ou perméable, d'une phase aqueuse comprenant au moins un type de bactéries calcifiantes, et de préférence *Sporosarcina pasteurii,* lesdites bactéries calcifiantes ayant été cultivées en présence d'un agent d'adhésion assimilable par les bactéries calcifiantes, et de préférence en présence d'inuline, et éventuellement au moins un sel d'ions divalents, de préférence choisi parmi les ions calcium, magnésium, nickel, zinc, et l'une quelconque de leurs combinaisons, et encore de préférence choisi parmi les ions de calcium ou de magnésium ;
- l'activation de la calcification par la mise en contact des bactéries calcifiantes avec une phase aqueuse calcifiante comprenant éventuellement au moins un agent d'adhésion assimilable par les bactéries calcifiantes, et de préférence l'inuline, et éventuellement au moins un sel d'ions divalents, de préférence choisi parmi les ions calcium, magnésium, nickel, zinc, et l'une quelconque de leurs combinaisons, et encore de préférence choisi parmi les ions de calcium ou de magnésium.

La méthode de renforcement de sols permet notamment le renforcement de sol fins ou liquéfiables ayant une perméabilité très faible, de l'ordre de 10^(-5) m/s. La consolidation ou l'étanchéité de tels sols implique l'injection de solution de bactéries calcifiantes pouvant pénétrer profondément dans le sol via le milieu du culture.

Par exemple, les bactéries calcifiantes sont injectées dans le sol, par gravité ou sous pression, au moyen de forages d'alimentation. Avantageusement, la méthode de renforcement comprend une alimentation par circulation des bactéries calcifiantes en solution aqueuse. Cette circulation peut être assurée par l'intermédiaire de forages d'alimentation, de forages de pompage ou de captage. Ces procédés comprennent avantageusement des moyens de contrôle de l'évolution du traitement pour adapter le traitement. Ces techniques sont notamment décrites dans le brevet FR 2 873 725 B1 (compagnie du sol).

Sur les figures :
La figure 1 représente la structure de l'inuline ;
La figure 2 représente l'évolution de la croissance de *Sporosarcina pasteurii* dans un milieu de culture avec ou sans chicorée ;
La figure 3 compare la DO (Densité Optique) cumulée en entrée et en sortie de colonne en fonction du volume injecté d'un milieu de culture sans chicorée selon l'exemple 3 ;
La figure 4 compare la DO cumulée en entrée et en sortie de colonne en fonction du volume injecté d'un milieu de culture avec 4g/L de chicorée selon l'exemple 3 ;
La figure 5 représente un graphique de l'estimation du taux de fixation par ajout de chicorée et d'une source de calcium selon l'exemple 4 ;
La figure 6 représente la résistance à la compression de colonnes de sable de Fontainebleau inoculées avec *Sporosarcina pasteurii* après réaction avec le milieu calcifiant contenant ou non de l'inuline ;
La figure 7 est une image MEB d'un sable bio-calcifié en absence d'inuline dans les milieux de culture et de calcification ;
La figure 8 est une image MEB d'un sable bio-calcifié en présence d'inuline dans le milieu de calcification.

D'autres buts, caractéristiques et avantages de l'invention apparaîtront clairement à l'homme de l'art suite à la lecture de la description explicative qui fait référence à des exemples qui sont donnés seulement à titre d'illustration et qui ne sauraient en aucune façon limiter la portée de l'invention.

Les exemples font partie intégrante de la présente invention et toute caractéristique apparaissant nouvelle par rapport à un état de la technique antérieure quelconque à partir de la description prise dans son ensemble, incluant les exemples, fait partie intégrante de l'invention dans sa fonction et dans sa généralité.

Ainsi, chaque exemple a une portée générale.

D'autre part, dans les exemples, tous les pourcentages sont donnés en poids, sauf indication contraire, et la température est exprimée en degré Celsius sauf indication contraire, et la pression est la pression atmosphérique, sauf indication contraire.

### EXEMPLES

### Exemple 1 : Criblage de sucres assimilables par une bactérie calcifiante

Pour provoquer la fixation des bactéries sur un support, on peut stimuler certaines voies biochimiques afin de synthétiser des exo polysaccharides (EPS). Les EPS sont des polymères des sucres, dont le premier rôle est de faciliter l'adhésion des bactéries en diminuant les forces d'interactions entre le micro-organisme et son environnement immédiat (exemple : support solide de type sable de Fontainebleau).

La première étape a été de faire un criblage des différents sucres qui existent pour identifier celui ou ceux qui sont assimilables et qui stimulent la synthèse des EPS chez *Sporosarcina pasteurii,* de préférence sans inhiber la synthèse de l'uréase.

Pour cela on a utilisé deux types de galeries API : API 20 E et API 50CH. Ces tests se présentent sous formes de micro-tubes contenant des substrats déshydratés et qui sont inoculés avec une suspension bactérienne. Les réactions produites pendant la période d'incubation se traduisent par des virages colorés spontanés ou révélés par l'addition des réactifs. Les résultats sont présentés dans le tableau 1 ci-dessous.

**Tableau 1 :Identification des sucres assimilables par S. pasteurii (CIP 66.21 Pasteur) à l'aide dé galeries API. Ce qui est noté en positif (+) correspond un changement de couleur dans la cupule dû à une production d'acide en anaérobiose ou a une assimilation se traduisant par une croissance du micro-organisme.**

| **Tests** | **Composants** | **résultats** |
|---|---|---|
| ONPG | 2- NITROPHENYLBETAdD GALACOPYRANOSIDE pour la beta galactosidase | - |
| ADH | L-arginine/ARGININE DIHYDROLASE | - |
| LDC | I-lysine /LYSINE DECARBOXYLASE | - |
| oçdc | I-ornithine/ORNITHINE DECARBOXYLASE | - |
| CIT | Citrate /UTILISATION DE CITRATE | - |
| H2S | Sodium thiosulfate /PRODUCTION DE H2S | - |
| UREE TDA | UREASE TRYPTOPHANE DESAMINNASE | + |
| IND | PRODUCTION INDOLE | - |
| VP | Na pyruvate/ production acétoïne | - |
| GEL | Gélatinase(gélatine) | - |
| GLU | D glucose/fermentation oxydation | - |
| MAN | D-mannitol/fermentation oxydation | - |
| INO | inositol//fermentation-oxydation | - |
| SOR | D-sorbitol/fermentation-oxydation | - |
| RHA | L-rhammose/fermentation-oxydation | - |
| SAC | D-Saccharose/fermentation-oxydation | - |
| MEL | amygdaline/fermentation-oxydation | - |
| ARA | L-arabiniose /fermentation-oxydation | - |
| ox | Cytochrome -oxydase | - |
| GLY | Glycérol | |
| ERY | Reythritol | - |
| DARA | D rarabinose | - |
| LARA | L-arabinose | - |
| RIB | D -ribose | - |
| DXYL | D -xylose | - |
| LXYL | L-xylose | - |
| ADO | D-adonitol | - |
| MDX | Methyl bétad-xylopyranoside | - |
| GAL | D-galactose | - |
| FRU | D- fructose | - |
| MNE | D-Mannose | - |
| SBE | L-sorose | - |
| RHA | L-Rhamnose | - |
| DUL | Dulcitol | - |
| MDM | Methyl alpha d-mannopyranoside | - |
| MDG | Methyl alpha d-glucopyranoside | - |
| NAG | n-acétylglucosamine | - |
| ARB | Arbutine | - |
| ESC | Esculine citrate de fer | - |
| SAL | Salcine | - |
| CEL | D-cellobiose | - |
| MAL | D-maltose | - |
| LAC | D-lactose | - |
| MEL | D- melibiose | - |
| TRE | D-trehalose | - |
| INU | inuline | + |
| MLZ | D- mélézitose | |
| RAF | D-rafinose | - |
| AMD | Amidon | - |
| GLYG | Glycogène | - |
| XLT | Xylitol | - |
| GEN | Gentiobiose | - |
| TUR | D-turanose | - |
| LYX | D-lyxose | - |
| TAG | D-tagatose | - |
| LFUC | L-fucose | - |
| DARL | D-arabitol | - |
| LARL | L-arabitol | - |
| GNT | Potassium glucoNaTe | - |
| 2KG | Potassium2 cétogluconate | - |
| 5KG | Potassium 5 cétoqluconate | - |

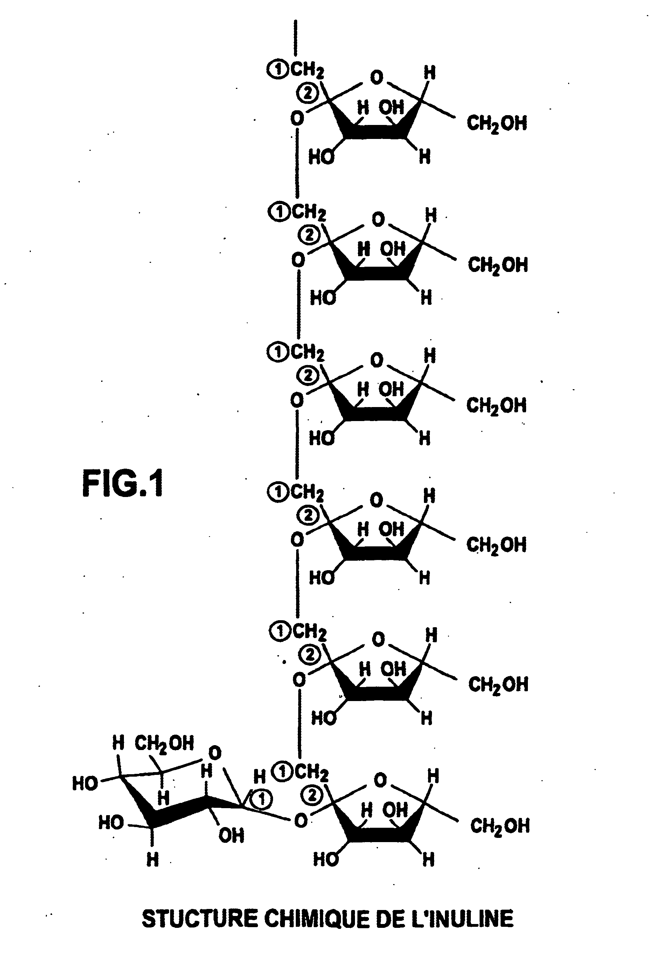

Cette analyse a permis d'identifier l'inuline (Structure donnée en figure 1) comme source de carbone assimilable par *Sporosarcina pasteurii.* Par ailleurs, les premiers tests réalisés avec de l'inuline ont mis en évidence l'adhésion des bactéries sur la verrerie de laboratoire par développement d'EPS. L'inuline est naturellement présente dans les végétaux et surtout dans la chicorée (racines) qui en contient 78%. C'est pourquoi la chicorée sera utilisée dans les expériences suivantes.

### Exemple 2 :Amélioration de la croissance de bactéries calcifiantes, et de la synthèse d'EPS en présence d'inuline dans le milieu de culture

Pour déterminer la quantité d'inuline nécessaire pour agir sur la synthèse de l'uréase et sur la production EPS chez *Sporosarcina pasteurii,* une partie de la source de carbone azotée (extrait de levure) a été remplacée par de la chicorée.

Aussi bien dans l'inoculum (20g extrait levure + 20g urée, pour 1L d'inoculum) que dans le milieu de culture (10g extrait de levure + 2.4g urée + 10µM de NiCl2 + 3g de NaCl, pour 1L de milieu de culture), la substitution d'un 1/3 à 1/2 (en masse) de l'extrait de levure par de la chicorée a amélioré la fixation sur la verrerie des bactéries tout en maintenant ou en augmentant leur activité enzymatique spécifique.

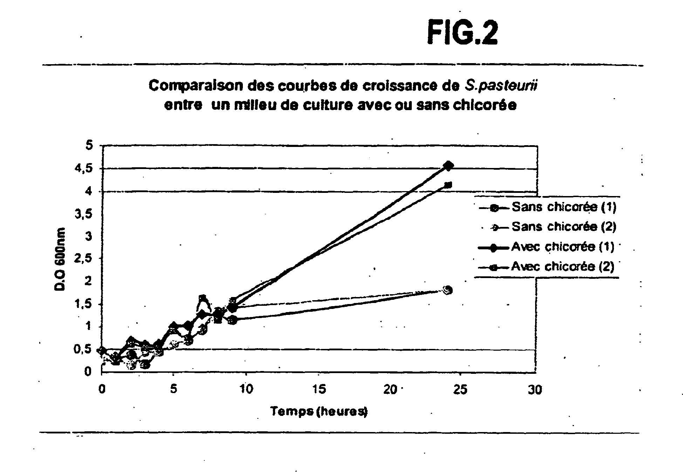

On remarque que l'ajout d'inuline dans les proportions citées ci-dessus a permis une croissance plus rapide des bactéries (Figure 2).

Le dosage d'inuline préconisé dans les milieux de culture est donc compris entre 0 et 10 g/L.

### Exemple 3 : Amélioration de l'adhésion de bactéries calcifiantes en présence d'inuline dans le milieu de culture

L'inuline, sous forme de chicorée, a été introduite dans les milieux de culture afin de déterminer son influence sur l'adhésion des bactéries vis-à-vis du support à traiter. La chicorée utilisée est de la poudre d'extrait de chicorée lyophilisée issu de la racine de *Cichorium Intibus* et vendue sous le nom commercial de « Chicorée soluble Leroux ». Pour cela, deux essais ont été menés en parallèle sur colonnes :

Les colonnes étaient constituées d'un tube de PVC de 63 mm de diamètre et 200 mm de hauteur positionné entre deux embases en PVC. Un centimètre de sable filtre était placé aux deux extrémités et l'ensemble de la colonne était complétée avec du sable de Fontainebleau tassé sous eau à l'aide de tapotements. Le sable de Fontainebleau est le sable de qualité NE34 de SIFRACO. Les injections se faisaient du haut vers le bas.

Les bactéries (*Sporosarcina pasteurii - CIP 66.21 Pasteur*) ont été cultivées dans deux milieux de culture (1L d'eau de laboratoire) différents contenant 10g d'extrait de levure, 2.4g d'urée, 10µM de NiCl2 et 3g de NaCl, l'un des milieux contenant en plus 4g/L de chicorée. Lorsque les bactéries sont en phase exponentielle (DO > 2.5), un volume de porosité de ce milieu est injecté dans les colonnes avec une vitesse de percolation de 20cm/h puis laissé à réagir pendant 3 heures. Le liquide interstitiel est ensuite chassé et remplacé par 2 volumes de porosité d'eau déminéralisée à une vitesse de percolation de 20cm/h. L'ensemble des expériences a été fait à 16°C.

Le suivi de la DO en sortie de colonne permet de connaître le taux d'accroche des bactéries sur le sable de Fontainebleau. Une mesure de DO étalon est faite au préalable sur chacun des milieux auxquels ont été extraits les bactéries pour s'affranchir des écarts de lecture liées au milieu lui-même. L'écart des DO d'entrée entre les milieux avec et sans chicorée s'explique par le fait que la croissance bactérienne est plus importante en présence d'inuline.

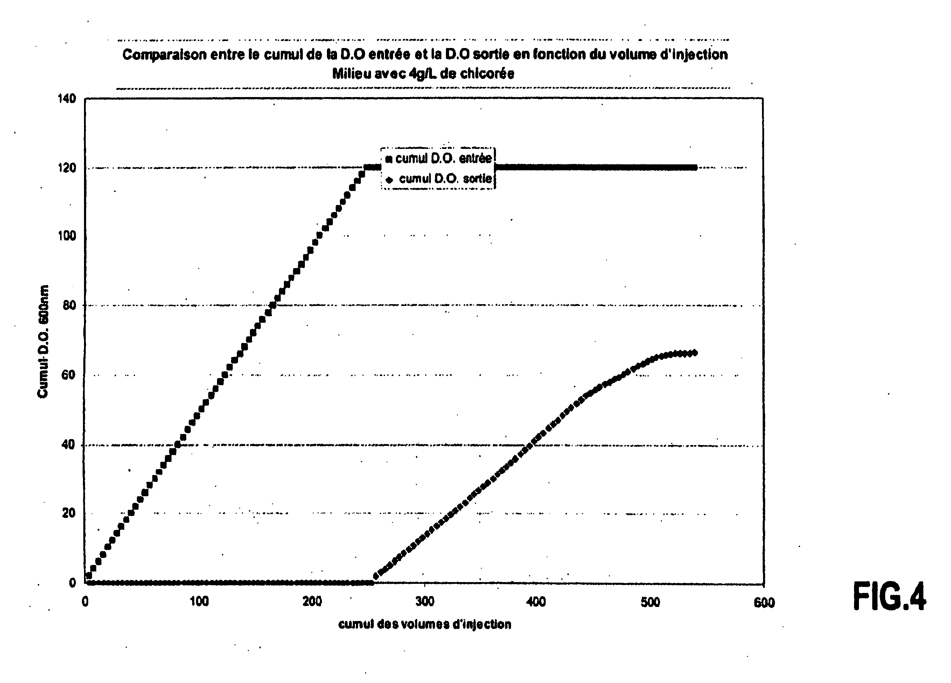

Le volume de la porosité de la colonne étant de 250 ml, la détection des premières bactéries en sortie de colonne se fait après avoir injecté 250 ml de milieu de culture. La représentation graphique du cumul de DO en entrée et en sortie de colonne permet de visualiser facilement le taux d'accroche des bactéries sur le support granulaire. Ainsi, une DO d'entrée de 2, mesurée toutes les minutes, donne une DO d'entrée cumulée de 120 au bout d'une heure d'injection (Figure 4). La mesure des DO de sortie se fait également toutes les minutes. Le taux de fixation se calcule de la façon suivante : Taux fixation = (DO d'entrée finale cumulée - DO de sortie finale cumulée) / DO d'entrée finale cumulée.

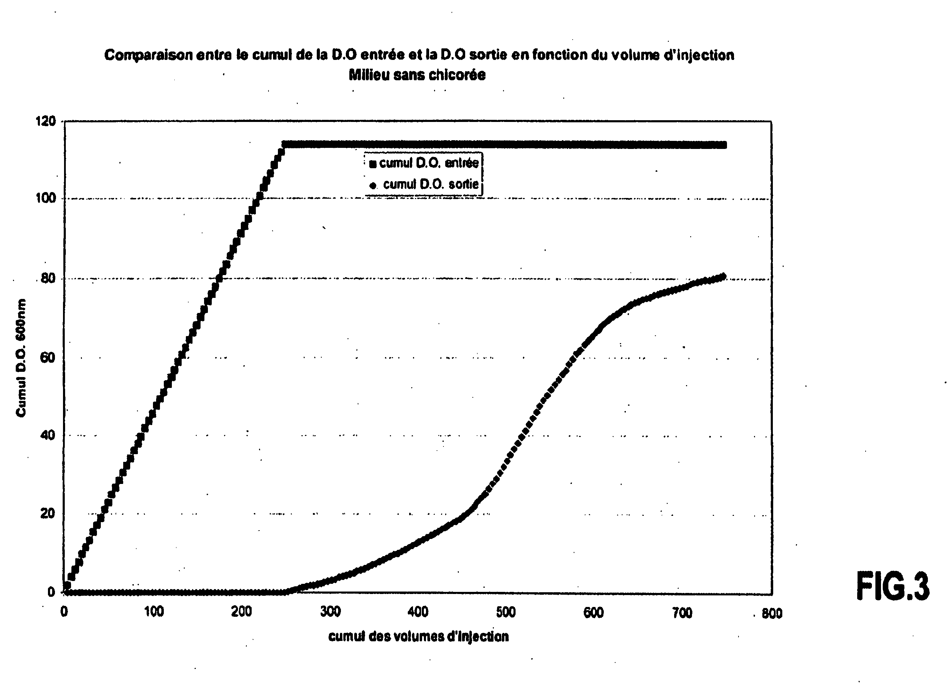

Les figures 3 et 4 comparent le cumul des mesures de DO d'entrée et de sortie de colonnes respectivement sans et avec chicorée dans le milieu de culture. L'essai sans chicorée montre un taux de fixation des bactéries de 30% alors que la présence de chicorée dans le milieu de culture permet une fixation de 46% des bactéries.

### Exemple 4 : Amélioration de l'adhésion de bactéries calcifiantes en présence d'inuline et de sel de calcium dans le milieu de culture

L'action de l'inuline sur l'adhésion bactérienne ajoutée dans le milieu de culture sous forme de chicorée (voir exemple 3), peut être renforcée par la présence d'ions divalents.

### 4.1. ions calcium :

Les colonnes ont été préparées conformément à l'exemple 3.

Les bactéries (Sporosarcina pasteurii - CIP 66.21 Pasteur) ont été cultivées dans un milieu de culture (1L d'eau de laboratoire) contenant 10g d'extrait de levure, 3g NaCl, 2.4g d'urée, 0.1g MgCl2, 0.0128g NiCl2. Lorsque les bactéries sont en fin de phase exponentielle, on a ajouté dans le milieu de culture :
- soit une source de calcium (10mM Ca(NO3)2);
- soit de la chicorée à raison de 4 ou 8 g/L ;
- soit une source de calcium (10mM Ca(NO3)2) et de la chicorée à raison de 4 ou 8 g/L.

Le tout a été laissé sous agitation une heure avant son injection dans les colonnes.

Les conditions d'injection sont identique à celles de l'exemple 3. L'ensemble des expériences a été réalisé à 20°C.

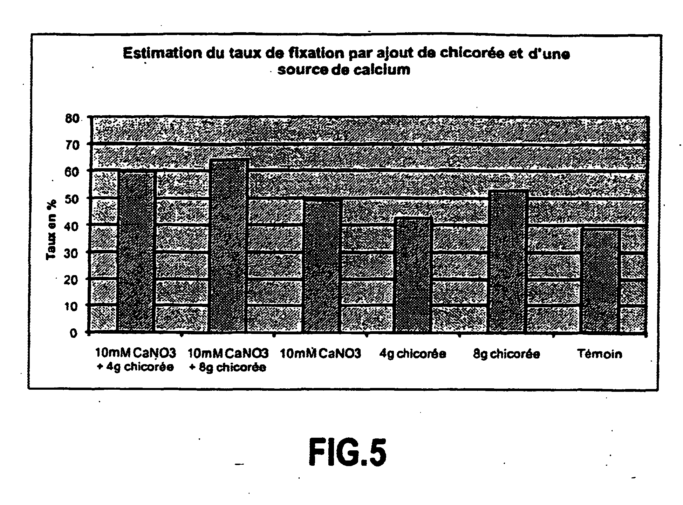

Les cumuls de DO d'entrée et de sortie de colonnes sont comparés et exprimés sous forme de pourcentage de perte de DO, ce qui représente le taux de fixation des bactéries dans la colonne. La figure 5 représente les taux de fixation des bactéries stimulés par l'ajout de chicorée, de sel de calcium ou des deux dans le milieu de culture avant injection.

Les résultats sont résumés dans le tableau 2 et figure 5 :

**Tableau 2**

| | 10mM Ca(NO3)2 + 4g chicorée | 10mM Ca(NO3)2 + 8q chicorée | 10mM Ca(NO3)2 | 4g chicorée | 8g chicorée | Témoin |
|---|---|---|---|---|---|---|
| Taux de fixation (%) | **60** | **64,3** | 49,5 | 43 | 53 | 39 |

Le témoin sans ajout de sel de calcium ni de chicorée supplémentaire dans le milieu de culture a un taux de fixation de 39%. L'ajout de chicorée permet d'accroître ce taux, mais l'ajout de chicorée couplé avec du nitrate de calcium permet d'augmenter significativement des valeurs de fixation cellulaire par rapport à un procédé sans addition d'un quelconque agent d'adhésion. On rapporte bien ici un effet de synergie entre la chicorée et à celle de calcium.

### 4.2. ions magnésium :

Le protocole est identique à ce lui de l'exemple 4.1 en remplaçant les ions calcium (Ca(NO3)2) par des ions magnésium (Mg(NO3)2).

Les résultats obtenus montrent une synergie similaire à celle obtenue avec les ions calcium, en présence d'inuline.

### Exemple 5 : Amélioration de la calcification en présence d'inuline dans le milieu calcifiant

De l'inuline sous forme de chicorée a été mise dans les milieux de calcifications pour déterminer son action sur le processus de calcification. Pour cela, deux colonnes ont été réalisées :

Les colonnes étaient constituées d'un tube de PVC de 63 mm de diamètre et 200 mm de hauteur positionné entre deux embases en PVC. Un centimètre de sable filtre était placé aux deux extrémités et l'ensemble de la colonne était complétée avec du sable de Fontainebleau tassé sous eau à l'aide de tapotements. Le sable de Fontainebleau est le sable de qualité NE34 de SIFRACO. Les injections se faisaient du haut vers le bas.

Les bactéries (*Sporosarcina pasteurii - CIP 66.21 Pasteur*) ont été cultivées dans un milieu de culture (1L d'eau de laboratoire) contenant 10 g d'extrait de levure et 2.4 g d'urée. Lorsqu'elles ont été en fin de phase exponentielle (DO > 2.5), un volume de porosité de ce milieu a été injecté dans les colonnes avec un débit de 85 ml/h soit une vitesse de percolation de 6.6 cm/h.

Cinq volumes de porosité de milieu calcifiant (CaCl₂ et urée en équimolaire à 0.5 M) ont ensuite été injectés avec un débit de 60 mL/h pour activer la calcification. Dans l'une des colonnes, le milieu calcifiant a été additionné de 1 g/L de chicorée.

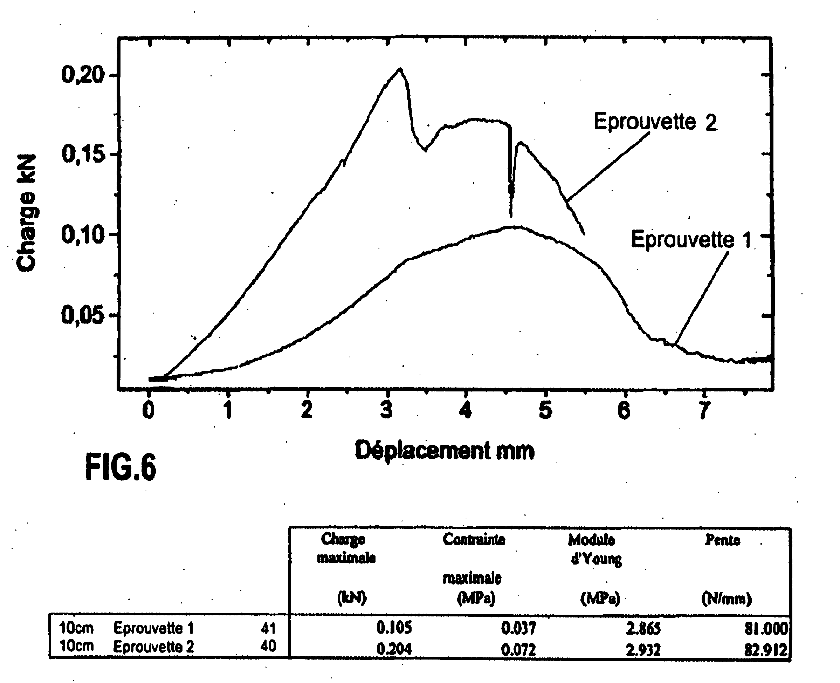

Les écrasements de ces deux colonnes montrent une résistance à la compression deux fois supérieures pour l'échantillon contenant de la chicorée par rapport à l'échantillon témoin (Figure 6). Il faut noter que sur la courbe correspondant au milieu additionné d'inuline, la résistance du sable de Fontainebleau est plus importante, ce qui indique une meilleure calcification bactérienne. Les ruptures de pente sont typiques de l'adhésion des bactéries au support. La mesure de la résistance à la compression a été réalisée selon le protocole de la norme NF EN 12390-3.

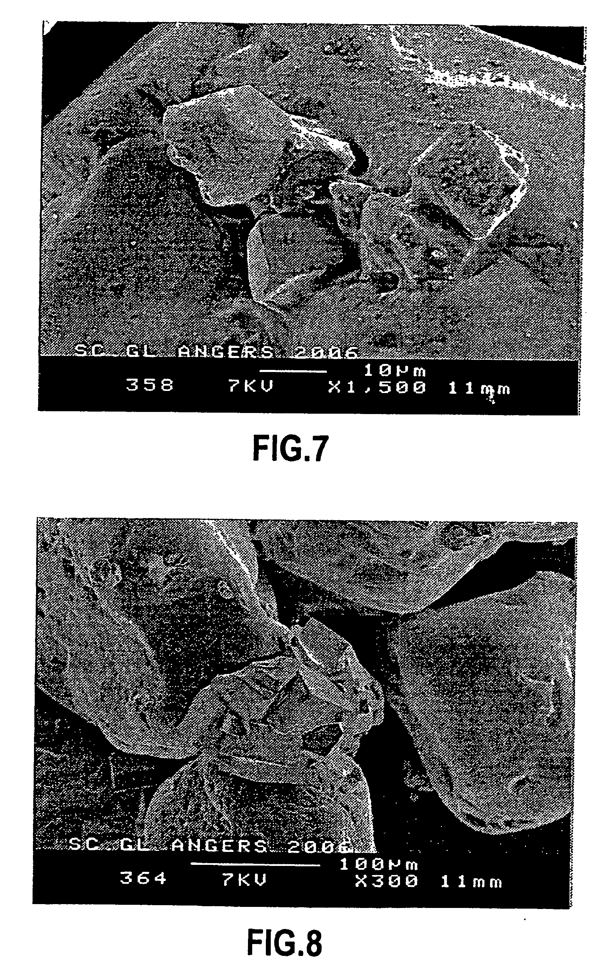

Les images faites au MEB (Microscope Electronique à Balayage) montrent que les cristaux de calcite néo-formés ont des tailles d'environ 10 µm en absence d'inuline dans les milieux de culture et de calcification (Figure 7), alors que cette taille passe à environ 50 µm lorsque le milieu de calcification contient de l'inuline (Figure 8). Cette différence de taille de calcite néo-formée pourrait expliquer les écarts de valeurs de résistance à la compression.

## Revendications

1. Méthode pour améliorer la résistance d'un matériau poreux ou perméable, de préférence un support poreux ou perméable comme un support minéral et/ou organique poreux ou perméable, tel qu'un sol, une roche, ou un matériau de construction, comprenant :
- la mise en contact d'au moins un type de bactéries calcifiantes avec un matériau poreux ou perméable ;
- la mise en contact des bactéries calcifiantes avec un milieu calcifiant, **caractérisée en ce que** ladite méthode comprend :
- la mise en contact des bactéries calcifiantes avec un agent d'adhésion et l'assimilation par les bactéries calcifiantes de l'agent d'adhésion.

2. Méthode, selon la revendication 1, **caractérisée en ce que** l'agent d'adhésion est ajouté au milieu de culture des bactéries, et/ou dans l'inoculum, avant ou lors de la mise en contact des bactéries calcifiantes, avec le matériau poreux ou perméable, ou ajouté au milieu calcifiant avant ou lors de la mise en contact des bactéries calcifiantes avec le milieu calcifiant, ou ajouté dans le milieu de culture et dans le milieu calcifiant.

3. Méthode, selon l'une quelconque des revendications 1 à 2, **caractérisée en ce que** la bactérie calcifiante est *Sporosarcina pasteurii.*

4. Méthode, selon l'une quelconque des revendications 1 à 3, **caractérisée en ce que** l'agent d'adhésion est choisi parmi le groupe consistant en l'inuline ou ses dérivés, le topinambour, la patate douce, le salsifis, le poireau, la chicorée, l'artichaut, l'oignon, l'ail, l'échalote, l'aunée (*Inula helenium*)*,* et l'un quelconque de leurs mélanges.

5. Méthode, selon l'une quelconque des revendications 1 à 4, **caractérisée en ce que** la méthode comprend la mise en contact des bactéries calcifiantes avec au moins un sel d'ions divalents.

6. Méthode, selon la revendication 5, **caractérisée en ce qu'**elle comprend comme ion divalent un sel de calcium sous forme de chlorure de calcium, de nitrate de calcium, ou d'une combinaison des deux.

7. Méthode pour le renforcement du sol, en particulier pour la consolidation de sol liquéfiable, la stabilisation de pentes, la calcification de supports minéraux ou organiques poreux ou perméables, ou la rénovation ou la protection de façades, ladite méthode comprenant la mise en oeuvre d'une méthode telle que définie à l'une quelconque des revendications 1 à 6.

8. Méthode selon l'une quelconque des revendications 1 à 7, **caractérisée en ce que** la méthode est une méthode de renforcement du sol comprenant :
- l'injection, dans un sol, d'une phase aqueuse comprenant au moins un type de bactéries calcifiantes, et de préférence *Sporosarcina pasteurii,* lesdites bactéries calcifiantes ayant été cultivées éventuellement en présence d'un agent d'adhésion assimilable par les bactéries calcifiantes, et de préférence en présence d'inuline,
- l'activation de la calcification par la mise en contact des bactéries calcifiantes avec une phase aqueuse calcifiante comprenant au moins un agent d'adhésion assimilable par les bactéries calcifiantes, et de préférence l'inuline, et éventuellement au moins un sel d'ion divalent.

9. Méthode selon l'une quelconque des revendications 1 à 7, **caractérisée en ce que** la méthode est une méthode de renforcement du sol comprenant :
- l'injection, dans un sol, d'une phase aqueuse comprenant au moins un type de bactéries calcifiantes, et de préférence *Sporosarcina pasteurii,* lesdites bactéries calcifiantes ayant été cultivées en présence d'un agent d'adhésion assimilable par les bactéries calcifiantes, et de préférence en présence d'inuline,
- l'activation de la calcification par la mise en contact des bactéries calcifiantes avec une phase aqueuse calcifiante comprenant éventuellement au moins un agent d'adhésion assimilable par les bactéries calcifiantes, et de préférence l'inuline, et éventuellement au moins un sel d'ion divalent.

10. Composition pour la consolidation de sols comprenant au moins un type de bactéries calcifiantes, comme par exemple *Sporosarcina pasteurii,* ladite composition comprenant en outre un milieu de culture et/ou un milieu de calcification pour au moins ledit type de bactéries calcifiantes, et une concentration d'inuline supérieure à 0 et inférieure à 10 g/L dans le milieu de culture ou dans l'inoculum, ou dans le milieu de calcification.

11. Composition pour la consolidation de sols selon la revendication 10, **caractérisée en ce qu'**elle comprend également au moins un sel d'ion divalent.

12. Utilisation d'au moins un agent d'adhésion assimilable par une bactérie calcifiante, éventuellement en combinaison avec au moins un sel d'ion divalent, pour améliorer la calcification d'un support minéral ou organique poreux ou perméable, tel qu'un support siliceux et/ou calcaire, ou un sol, par voie biotechnologique, de préférence en utilisant *Sporosarcina pasteurii.*

## Claims

1. A method for improving the strength of a porous or permeable material, preferably a porous or permeable substrate, for example a porous or permeable, inorganic and/or organic substrate, such as a soil, a rock, or a building material, comprising:
- bringing at least one type of calcifying bacteria into contact with a porous or permeable material;
- bringing the calcifying bacteria into contact with a calcifying medium, **characterized in that** said method comprises:
- bringing the calcifying bacteria into contact with an adhesion agent, and assimilation of the adhesion agent by the calcifying bacteria.

2. The method as claimed in claim 1, **characterized in that** the adhesion agent is added to the bacterial culture medium and/or to the inoculum, before or while the calcifying bacteria are brought into contact with the porous or permeable material, or added to the calcifying medium before or while the calcifying bacteria are brought into contact with the calcifying medium, or added to the culture medium and to the calcifying medium.

3. The method as claimed in either one of claims 1 and 2, **characterized in that** the calcifying bacterium is *Sporosarcina pasteurii.*

4. The method as claimed in any one of claims 1 to 3, **characterized in that** the adhesion agent is chosen from the group consisting of inulin or derivatives thereof, Jerusalem artichoke, sweet potato, oyster-plant, leek, chicory, artichoke, onion, garlic, shallot, elecampane *(Inula helenium),* and any one of the mixtures thereof.

5. The method as claimed in any one of claims 1 to 4, **characterized in that** the method comprises bringing the calcifying bacteria into contact with at least one divalent ion salt.

6. The method as claimed in claim 5, **characterized in that** the divalent ion salt is a calcium salt is in the form of calcium chloride or calcium nitrate, or a combination of both.

7. A method for reinforcement of the soil, in particular for the consolidation of liquefiable soil, the stabilization of slopes, the calcification of porous or permeable, inorganic or organic substrates, or the restoration or protection of frontages, said method comprising the implementation of a method as defined in any one of claims 1 to 6.

8. The method as claimed in any one of claims 1 to 7, **characterized in that** said method is a method for reinforcement of the soil which comprises:
- injecting, into the soil, an aqueous phase comprising at least one type of calcifying bacteria, and preferably *Sporosarcina pasteurii,* said calcifying bacteria having been cultured optionally in the presence of an adhesion agent that can be assimilated by the calcifying bacteria, and preferably in the presence of inulin,
- activating the calcification by bringing the calcifying bacteria into contact with a calcifying aqueous phase comprising at least one adhesion agent that can be assimilated by the calcifying bacteria, and preferably inulin, and optionally at least one divalent ion salt.

9. The method as claimed in any one of claims 1 to 7, **characterized in that** said method is a method for reinforcement of the soil which comprises:
- injecting, into the soil, an aqueous phase comprising at least one type of calcifying bacteria, and preferably *Sporosarcina pasteurii,* said calcifying bacteria having been cultured in the presence of an adhesion agent that can be assimilated by the calcifying bacteria, and preferably in the presence of inulin,
- activating the calcification by bringing the calcifying bacteria into contact with a calcifying aqueous phase optionally comprising at least one adhesion agent that can be assimilated by the calcifying bacteria, and preferably inulin, and optionally at least one divalent ion salt.

10. A composition for the consolidation of soils comprising at least one type of calcifying bacteria, for example *Sporosarcina pasteurii,* said composition further comprising a culture medium and/or a calcification medium for said at least one type of calcifying bacteria, and a concentration of inulin greater than 0 and less than 10 g/l in the culture medium or in the inoculum, or in the calcification medium.

11. The composition for the consolidation of soils as claimed in claim 10, **characterized in that** it further comprises at least one divalent ion salt.

12. Use of at least one adhesion agent that can be assimilated by a calcifying bacterium, optionally in combination with at least one divalent ion salt, for improving the calcification of a porous or permeable, inorganic or organic substrate, such as a siliceous and/or calcareous substrate, or a soil, through biotechnology, preferably using *Sporosarcina pasteurii.*

## Patentansprüche

1. Verfahren zur Verbesserung der Widerstandsfähigkeit eines porösen oder durchlässigen Materials, vorzugsweise eines porösen oder durchlässigen Trägers, wie eines mineralischen und/oder organischen porösen oder durchlässigen Trägers, wie eines Bodens, eines Gesteins, oder eines Baustoffes, umfassend:
- das Inkontaktbringen wenigstens einer Art von Verkalkungsbakterien mit einem porösen oder durchlässigen Material,
- das Inkontaktbringen der Verkalkungsbakterien mit einem Verkalkungsmedium, **dadurch gekennzeichnet, daß** das Verfahren umfaßt:
- das Inkontaktbringen der Verkalkungsbakterien mit einem Haftmittel und die Aufnahme des Haftmittels durch die Verkalkungsbakterien.

2. Verfahren nach Anspruch 1, **dadurch gekennzeichnet, daß** das Haftmittel dem Kulturmedium der Bakterien, und/oder in das Inokulum, vor oder während des Inkontaktbringens der Verkalkungsbakterien mit dem porösen oder durchlässigen Material (zu)gegeben wird oder dem Verkalkungsmedium vor oder während des Inkontaktbringens der Verkalkungsbakterien mit dem Verkalkungsmedium zugegeben wird oder in das Kulturmedium und in das Verkalkungsmedium gegeben wird.

3. Verfahren nach einem der Ansprüche 1 bis 2, **dadurch gekennzeichnet, daß** das Verkalkungsbakterium *Sporosarcina pasteurii* ist.

4. Verfahren nach einem der Ansprüche 1 bis 3, **dadurch gekennzeichnet, daß** das Haftmittel aus der Gruppe bestehend aus Inulin oder seinen Derivaten, Topinambur, Süßkartoffel, Haferwurzel, Porree, Chicorée, Artischocke, Zwiebel, Knoblauch, Schalotte, Alant *(Inula helenium)* und irgendeiner ihrer Mischungen ausgewählt ist.

5. Verfahren nach einem der Ansprüche 1 bis 4, **dadurch gekennzeichnet, daß** das Verfahren das Inkontaktbringen der Verkalkungsbakterien mit wenigstens einem Salz zweiwertiger Ionen umfaßt.

6. Verfahren nach Anspruch 5, **dadurch gekennzeichnet, daß** es als zweiwertiges Ion ein Calciumsalz in Form von Calciumchlorid, Calciumnitrat oder einer Kombination aus beiden umfaßt.

7. Verfahren zur Stärkung des Bodens, insbesondere für die Verfestigung von verflüssigbarem Boden, die Stabilisierung von Hängen, die Verkalkung von mineralischen oder organischen porösen oder durchlässigen Trägern oder die Renovierung oder den Schutz von Fassaden, wobei das Verfahren die Durchführung eines in einem der Ansprüche 1 bis 6 definierten Verfahrens umfaßt.

8. Verfahren nach einem der Ansprüche 1 bis 7, **dadurch gekennzeichnet, daß** das Verfahren ein Verfahren zur Stärkung des Bodens ist, umfassend:
- das Einleiten - in einen Boden - einer wäßrigen Phase, die wenigstens eine Art von Verkalkungsbakterien und vorzugsweise *Sporosarcina pasteurii* umfaßt, wobei die Verkalkungsbakterien eventuell in Anwesenheit eines durch die Verkalkungsbakterien aufnehmbaren Haftmittels und vorzugsweise in Anwesenheit von Inulin kultiviert worden sind,
- Aktivieren der Verkalkung durch das Inkontaktbringen der Verkalkungsbakterien mit einer wäßrigen Verkalkungsphase, die wenigstens ein durch die Verkalkungsbakterien aufnehmbares Haftmittel und vorzugsweise Inulin, sowie eventuell wenigstens ein Salz eines zweiwertigen Ions umfaßt.

9. Verfahren nach einem der Ansprüche 1 bis 7, **dadurch gekennzeichnet, daß** das Verfahren ein Verfahren zur Stärkung des Bodens ist, umfassend:
- das Einleiten - in einen Boden - einer wäßrigen Phase, die wenigstens eine Art von Verkalkungsbakterien und vorzugsweise *Sporosarcina pasteurii* umfaßt, wobei die Verkalkungsbakterien in Anwesenheit eines durch die Verkalkungsbakterien aufnehmbaren Haftmittels und vorzugsweise in Anwesenheit von Inulin kultiviert worden sind,
- Aktivieren der Verkalkung durch das Inkontaktbringen der Verkalkungsbakterien mit einer wäßrigen Verkalkungsphase, die eventuell wenigstens ein durch die Verkalkungsbakterien aufnehmbares Haftmittel und vorzugsweise Inulin, sowie eventuell wenigstens ein Salz eines zweiwertigen Ions umfaßt.

10. Zusammensetzung für die Verfestigung von Böden, umfassend wenigstens eine Art von Verkalkungsbakterien, wie zum Beispiel *Sporosarcina pasteurii,* wobei die Zusammensetzung ferner ein Kulturmedium und/oder ein Verkalkungsmedium für wenigstens die Art von Verkalkungsbakterien umfaßt und eine Inulinkonzentration von mehr als 0 und weniger als 10 g/L in dem Kulturmedium oder in dem Inokulum oder in dem Verkalkungsmedium aufweist.

11. Zusammensetzung für die Verfestigung von Böden nach Anspruch 10, **dadurch gekennzeichnet, daß** sie auch wenigstens ein Salz eines zweiwertigen Ions umfaßt.

12. Verwendung wenigstens eines durch ein Verkalkungsbakterium aufnehmbaren Haftmittels eventuell in Kombination mit wenigstens einem Salz eines zweiwertigen Ions, zur Verbesserung der Verkalkung eines mineralischen oder organischen porösen oder durchlässigen Trägers, wie eines kiesel- und/oder kalkhaltigen Trägers, oder eines Bodens, auf biotechnologischem Weg, vorzugsweise unter Verwendung von *Sporosarcina pasteurii.*
